# EUROPÄISCHE PATENTSCHRIFT

(11) **EP 0 664 263 B1**
(45) Veröffentlichungstag und Bekanntmachung des Hinweises auf die Patenterteilung: **17.06.1998**
(21) Anmeldenummer: 94120507.2
(22) Anmeldetag: 23.12.1994
(51) Int. Cl.: B65G 47/14

(54) **Sortiermagazin**
Sorting magazine
Magasin de tri

(30) Priorität: 25.01.1994 DE 4401981
(43) Veröffentlichungstag der Anmeldung: 26.07.1995
(73) Patentinhaber: STOCKO Fasteners GmbH, 42327 Wuppertal (DE)
(72) Erfinder: Kamps, Rolf Dipl.-Ing., D-42329 Wuppertal (DE); Siegemund, Rainer Dipl.-Ing., D-42105 Wuppertal (DE)
(74) Vertreter: Stenger, Watzke & Ring Patentanwälte

(56) Entgegenhaltungen:
- GB-A- 841 093
- US-A- 2 595 071
- US-A- 3 696 968
- US-A- 4 238 023

## Beschreibung

Die Erfindung betrifft ein Sortiermagazin zur Bevorratung loser Kleinteile zur maschinellen Weiterverarbeitung, insbesondere in Ansetzvorrichtungen, wobei das Sortiermagazin aus einem seitlich offenen, wannenförmigen Behälter mit einer Einfüllöffnung für die Kleinteile sowie aus einem daran seitlich befestigten, trommelartigen Laufteil für das Sortieren der Kleinteile besteht.

Gattungsgemäße Sortiermagazine sind bekannt. Sie dienen der Bevorratung von Kleinteilen für die maschinelle Weiterverarbeitung. Solche Kleinteile können beispielsweise Nieten, Ösen, Druckknöpfe, Haken, Butons usw. sein, welche in sogenannten Ansetzmaschinen an ein Trägermaterial angesetzt werden. Derartige Ansetzmaschinen bestehen aus einem Ansetzwerkzeug, welches den Ansetzvorgang des Kleinteils am Trägermaterial ausführt. Diese Kleinteile werden in einem als Sortiermagazin ausgebildeten Magazin lose bevorratet, indem die Kleinteile lose eingefüllt werden. Aus diesem Sortiermagazin heraus werden die Kleinteile beispielsweise über eine Schiene dem Ansetzwerkzeug zugeführt, nachdem die Kleinteile innerhalb des Sortiermagazins vereinzelt und ausgerichtet worden sind. Das Sortiermagazin umfaßt zu diesem Zweck einen wannenförmigen Behälter, der eine Einfüllöffnung für die Kleinteile aufweist, und der im Bereich einer seitlichen Öffnung in Verbindung mit einem trommelartigen Laufteil steht, welches üblicherweise durch einen Motor angetrieben wird und der Vereinzelung und der Ausrichtung der Kleinteile dient. Das Laufteil leitet die Kleinteile zur Weiterverarbeitung weiter. Derartige Sortiermagazine werden in Verbindung mit einer Vielzahl von Produktions- und Montagevorrichtungen eingesetzt.

Ein Problem bekannter Sortiermagazine besteht darin, daß sich mit der Zeit im Sortiermagazin Ausschuß ansammelt, also Kleinteile, die das Sortiermagazin aufgrund von Verformungen nicht verlassen können. Darüber hinaus ist es wünschenswert, die Sortiermagazine als Funktionsgruppe in Verbindung mit unterschiedlichen Produktions- und/oder Montagevorrichtungen einsetzen zu können. In beiden Fällen muß das Sortiermagazin von Zeit zu Zeit entleert werden. Bekannte Sortiermagazine müssen zu diesem Zeck vollständig demontiert werden. Es ist auch bekannt, aufschwenkbare Sortiermagazinelemente, d. h. Behälter und/oder Laufteile anzuordnen, die Jedoch mittels besonderer Befestigungsmittel an der Vorrichtung nach dem Entleeren wieder fixiert werden müssen. Ist die Fixierung vergessen oder unzureichend betätigt worden, kommt es zu Fehlfunktionen und unter Umständen daraus resultierenden maschinenseitigen und/oder wirtschaftlichen Schäden.

Davon ausgehend liegt der Erfindung die **Aufgabe** zugrunde, ein Sortiermagazin der gattungsgemäßen Art dahingehend zu verbessern, daß es einfach entleert werden kann und sicher im Betrieb ist. Darüber hinaus soll eine Ansetzvorrichtung der oben beschriebenen Art dahingehend verbessert werden, daß das Sortiermagazin einfacher entleerbar und sicherer im Betrieb ist.

Zur technischen **Lösung** dieser Aufgabe wird ein gattungsgemäßes Sortiermagazin dadurch verbessert, daß der Behälter um eine Achse aus einer Füll- und Arbeitsstellung relativ zum Laufteil in eine Entleerungsstellung verdrehbar gelagert ist.

Durch diese erfindungsgemäße Ausgestaltung des Sortiermagazins wird durch einfaches Umdrehen des Behälters eine vollständige Entleerung des Sortiermagazins bewirkt. Andererseits ist die Funktionsstellung des Behälters durch Rückdrehen sicher wieder einzustellen und eine Fehlstellung gleich zu erkennen. Durch die einfache Verdrehbarkeit kann auf Anschlußsicherungen oder zusätzliche Befestigungen verzichtet werden, so daß keine Betriebsunsicherheiten durch die Verwendung des entleerbaren Behälters produziert werden.

Mit Vorteil wird angegeben, daß an dem Behälter im Bereich der Einfüllöffnung ein Deckel angeordnet ist. Zum einen wird die Betriebssicherheit dadurch verbessert, weil keine Fremdobjekte in unerwünschter Weise in den Behälter eintreten können. Zum anderen ist der Behälter dadurch gegen unbeabsichtigte Entleerung gesichert. In vorteilhafter Weise ist der Deckel an dem Behälter schwenkbar angeordnet, und zwar derart, daß er in Offenstellung eine Behälterseitenwand fortsetzend vom Behälter absteht. In vorteilhafter Weise hat der Deckel einen im wesentlichen U-förmigen Querschnitt. Dadurch kann er bei verdrehtem Behälter und in Offenstellung eine Ausfallrutsche für die Kleinteile darstellen. Dadurch ist eine geordnete Entleerung des Sortiermagazins gewährleistet.

Gemäß einem Vorschlag der Erfindung ist der Behälter in der Füll- bzw. Arbeitsstellung gesichert. Derartige Sicherungen sind aber nicht zur einwandfreien Funktion des Behälters erforderlich, sondern stellen reine Positioniersicherungen dar. Es kann sich dabei um einfache Rastvorrichtungen handeln. Selbstverständlich sind auch Verschraubungen, Einspannungen und dergleichen einsetzbar.

Gemäß einem weiteren Vorschlag der Erfindung weist das Sortiermagazin einen Verdrehanschlag für den Behälter auf. Dadurch wird sichergestellt, daß der Behälter nur bis zu einer definierten Entleerungsposition verdreht werden kann. Die Verdrehachse ist in vorteilhafter Weise an der Magazinrückwand montiert. Damit wird gleichzeitig eine Befestigung für den Behälter bereitgestellt.

Gemäß einem weiteren Vorschlag der Erfindung ist der Behälter durchsichtig, was eine optimale Einsicht in das Sortiermagazin gewährleistet.

Mit Vorteil wird mit der Erfindung eine Ansetzvorrichtung zum Ansetzen von Kleinteilen wie Nieten, Ösen, Druckknöpfen, Haken, Butons usw. an ein Trägermaterial angegeben, welches ein Sortiermagazin, ein Ansetzwerkzeug und eine zwischen beiden angeordnete Zuführschiene umfaßt. Eine derartige Ansetzvorrichtung ist an sich bekannt. Erfindungsgemäß wird eine derartige Ansetzvorrichtung mit einem wie oben beschriebenen Sortiermagazin bestückt. Damit ist die Ansetzvorrichtung hinsichtlich der Betriebssicherheit und hinsichtlich des Kleinteilehaushalts verbessert.

Weitere Vorteile und Merkmale der Erfindung ergeben sich aus der folgenden Beschreibung anhand der Figuren. Dabei zeigen:
- Figur 1: eine schematische Ansicht einer gattungsgemäßen Ansetzvorrichtung;
- Figur 2: eine schematische, teilgeschnittene Seitenansicht eines erfindungsgemäßen Sortiermagazins und
- Figur 3: eine schematische Frontansicht des Sortiermagazins gemäß Figur 2.

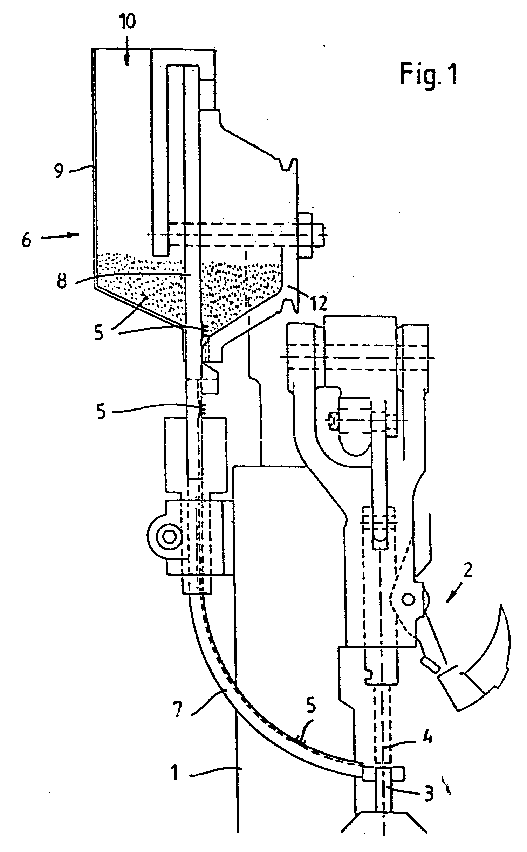

Zur Einordnung eines erfindungsgemäßen Sortiermagazins in den Gesamtzusammenhang einer damit bestückten Maschine wird beispielhaft mit Bezug auf Figur 1 eine schematisch dargestellte Ansetzmaschine beschrieben. Die Ansetzmaschine besteht aus einem Gestell 1, an welchem ein Ansetzwerkzeug 2 angeordnet ist. Dieses ist in herkömmlicher Weise aufgebaut und besteht im dargestellten Ausführungsbeispiel aus einem Amboß 3 sowie einem nach oben und nach unten beweglichen Stempel 4. Diesem Ansetzwerkzeug 2 werden die zu verarbeitenden Kleinteile 5 zugeführt, wie beispielsweise Nieten, Ösen, Druckknöpfe, Haken, Butons usw. Die Kleinteile 5 sind dabei in einem Sortiermagazin 6 bevorratet, an dessen unterem Ende im gezeigten Ausführungsbeispiel eine Schiene 7 angeordnet ist, über die dem Ansetzwerkzeug 2 die das Sortiermagazin 6 verlassenden Kleinteile 5 zugeführt werden. Die Schiene 7 ist im unteren Bereich zu diesem Zweck gekrümmt.

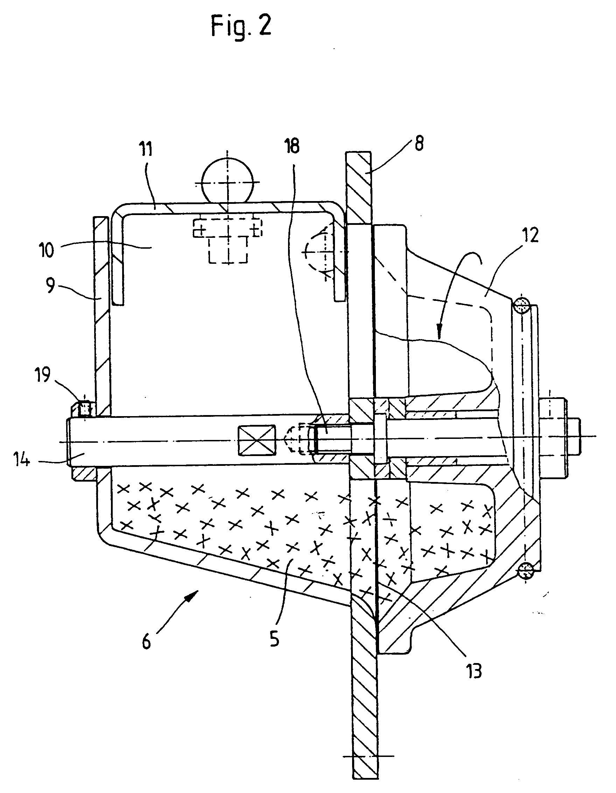

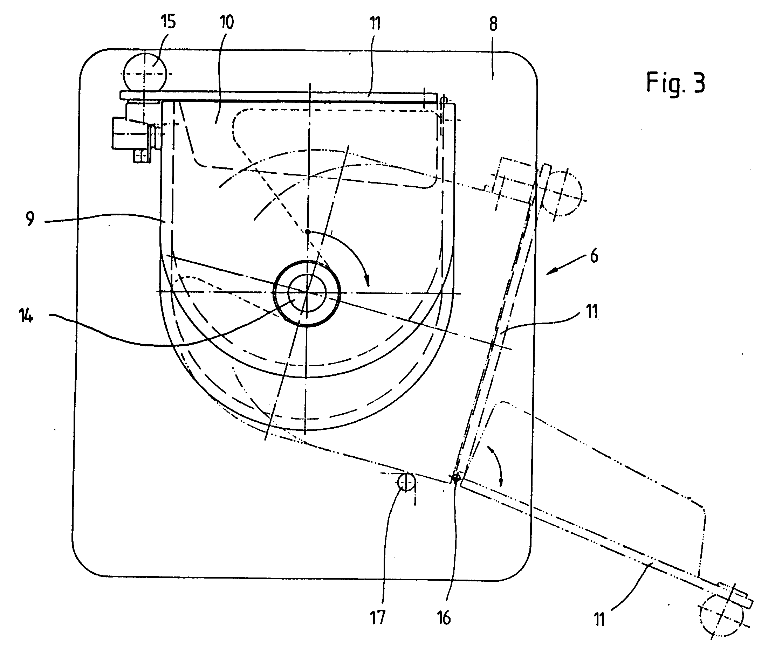

Ein Ausführungsbeispiel des Sortiermagazins ist in den Figuren 2 und 3 detailliert beschrieben. Das Sortiermagazin 6 besteht aus einem Behälter 9 mit einer Einfüllöffnung 10, an welcher ein Deckel 11 angeordnet ist. Der Behälter 9 ist an einer Magazinrückwand 8 angeordnet, auf deren anderen Seite ein Laufteil 12 angeordnet ist. Der Behälter 9 und das Laufteil 12 stehen im Bereich der Durchtrittsöffnung 13 miteinander in Verbindung. In dem Behälter 9 eingefüllte Kleinteile gelangen somit in das Laufteil 12. Das Laufteil 12 wird durch einen nicht gezeigten Motor angetrieben und dient der Vereinzelung und Sortierung der im Sortiermagazin 6 befindlichen Kleinteile 5. Die Funktion eines derartigen Laufteils ist an sich bekannt. Ein umlaufender Förderer gibt die vereinzelten Kleinteile 5 der Schiene 7 auf.

Im gezeigten Ausführungsbeispiel ist der Behälter 9 mittels einer Achse 14 an der Magazinrückwand 8 befestigt. Dadurch wird die drehbare Lagerung des Behälters 9 gewährleistet. Wie insbesondere in Figur 3 zu sehen, hat der Behälter 9 einen wannenförmigen Aufbau, so daß die Durchtrittsöffnung 13 auch bei einem verdrehten Behälter 9 voll von diesem überdeckt wird.

Der Behälter 9 ist, wie insbesondere in Figur 3 gezeigt, aus einer Füll- und Arbeitsstellung (durchgezogene Linien) in eine Entleerungsstellung (gestrichelte Linien) relativ zum Laufteil um die Achse 14 verdrehbar.

An dem Deckel 11 ist ein Griffelement 15 angeordnet, so daß der Deckel 11 geöffnet bzw. geschlossen werden kann. Wird der Behälter 9 verdreht, bleibt der Deckel 11 zunächst verschlossen. Aufgrund seines im wesentlichen U-förmigen Querschnittes bildet der um die Schwenkachse 16 zu öffnende Deckel 11 eine Ausfallrutsche für die im Behälter 9 befindlichen Teile. Somit wird ein geordnetes Entleeren des Behälters gewährleistet.

An der Magazinrückwand 8 ist ein Anschlag 17 angeordnet, durch welchen die Verdrehbarkeit des Behälters 9 begrenzt wird. Die Achse 14 ist im gezeigten Ausführungsbeispiel mittels eines Gewindebolzens 18 an der Magazinrückwand 8 gehalten und weist im vorderen Bereich eine Sicherung 19 auf. Durch diesen einfachen Aufbau wird auch eine leichte Auswechselbarkeit des Behälters gewährleistet. Durch den im wesentlichen durchsichtig gebildeten Behälter hat die Bedienperson einen guten Einblick in das Sortiermagazin 6.

### Bezugszeichenliste

- 1: Gestell
- 2: Ansetzwerkzeug
- 3: Amboß
- 4: Stempel
- 5: Kleinteile
- 6: Sortiermagazin
- 7: Schiene
- 8: Magazinrückwand
- 9: Behälter
- 10: Einfüllöffnung
- 11: Deckel
- 12: Laufteil
- 13: Durchtrittsöffnung
- 14: Achse
- 15: Griffelement
- 16: Schwenkachse
- 17: Anschlag
- 18: Gewindebolzen
- 19: Sicherung

## Patentansprüche

1. Sortiermagazin (6) zur Bevorratung loser Kleinteile, die einer Maschine zur weiteren Verarbeitung und/oder Montage zugeführt werden, wobei das Sortiermagazin (6) aus einem im wesentlichen seitlich offenen, wannenförmigen Behälter (9) mit einer Einfüllöffnung (10) für die Kleinteile (5) sowie aus einem daran seitlich befestigten, trommelartigen Laufteil (12) für das Sortieren der Kleinteile besteht,
**dadurch gekennzeichnet**,
daß der Behälter (9) um eine Achse (14) aus einer Füll- und Arbeitsstellung relativ zum Laufteil (12) in eine Entleerungsstellung verdrehbar gelagert ist.

2. Sortiermagazin nach Anspruch 1, dadurch gekennzeichnet, daß der Behälter einen Deckel (11) aufweist.

3. Sortiermagazin nach Anspruch 2, dadurch gekennzeichnet, daß der Deckel (11) am Behälter (9) schwenkbar gelagert ist.

4. Sortiermagazin nach einem der Ansprüche 2 oder 3, dadurch gekennzeichnet, daß der Deckel (11) einen im wesentlichen U-förmigen Querschnitt hat.

5. Sortiermagazin nach einem der vorhergehenden Ansprüche, dadurch gekennzeichnet, daß der Behälter (9) in der Füll- bzw. Arbeitsstellung gesichert ist.

6. Sortiermagazin nach einem der vorhergehenden Ansprüche, dadurch gekennzeichnet, daß ein Anschlag (17) zur Begrenzung des Verdrehwinkels des Behälters (9) angeordnet ist.

7. Sortiermagazin nach einem der vorhergehenden Ansprüche, dadurch gekennzeichnet, daß die Achse (14) an der Magazinrückwand (8) angeordnet ist.

8. Sortiermagazin nach einem der vorhergehenden Ansprüche, dadurch gekennzeichnet, daß der Behälter (9) aus einem durchsichtigen Material gebildet ist.

9. Ansetzvorrichtung zum Ansetzen von Kleinteilen (5) wie Nieten, Ösen, Druckknöpfen, Haken, Butons usw. an ein Trägermaterial, mit einem Ansetzwerkzeug (2) und einem Sortiermagazin (6), dadurch gekennzeichnet, daß das Sortiermagazin (6) nach wenigstens einem der Ansprüche 1 bis 8 ausgebildet ist.

## Claims

1. Sorting magazine (6) for the storage of loose small parts which are supplied to a machine for further processing and/or assembly, the sorting magazine (6) consisting of an essentially laterally open trough-shaped container (9) with a filling orifice (10) for the small parts (5) and of a drum-like moving part (12) for sorting the small parts, the said moving part being fastened laterally to the said container, characterized in that the container (9) is mounted rotatably about a shaft (14) relative to the moving part (12) out of a filling and working position into an emptying position.

2. Sorting magazine according to Claim 1, characterized in that the container has a lid (11)

3. Sorting magazine according to Claim 2, characterized in that the lid (11) is mounted pivotably on the container (9).

4. Sorting magazine according to one of Claims 2 or 3, characterized in that the lid (11) has an essentially U-shaped cross-section.

5. Sorting magazine according to one of the preceding claims, characterized in that the container (9) is secured in the filling or working position.

6. Sorting magazine according to one of the preceding claims, characterized in that a stop (17) is provided for limiting the angle of rotation of the container (9).

7. Sorting magazine according to one of the preceding claims, characterized in that the shaft (14) is arranged on the rear wall (8) of the magazine.

8. Sorting magazine according to one of the preceding claims, characterized in that the container (9) is formed from a transparent material.

9. Attaching device for attaching small parts (5), such as rivets, lugs, press-studs, hooks, buttons etc., to a carrier material, with an attaching tool (2) and with a sorting magazine (6), characterized in that the sorting magazine (6) is designed according to at least one of Claims 1 to 8.

## Revendications

1. Magasin de tri (6) pour tenir en réserve de petites pièces en vrac qui seront transmises à une machine en vue de leur transformation ultérieure et/ou de leur montage, le magasin de tri (6) étant constitué d'un récipient (9) en forme de bac, ouvert sensiblement sur le côté et comportant une ouverture de remplissage (10) pour les petites pièces (5), et d'une partie mobile en forme de tambour (12) qui y est fixée latéralement et qui sert au tri des petites pièces, caractérisé en ce que le récipient (9) est monté avec la possibilité de passer, par rapport a la partie mobile (12), d'une position de remplissage et de travail à une position de vidage en tournant autour d'un axe (14).

2. Magasin de tri selon la revendication 1, caractérisé en ce que le récipient comporte un couvercle (11).

3. Magasin de tri selon la revendication 2, caractérisé en ce que le couvercle (11) est monté avec une possibilité de pivotement sur le récipient (9).

4. Magasin de tri selon l'une des revendications 2 ou 3, caractérisé en ce que le couvercle (11) possède une section sensiblement en forme de U.

5. Magasin de tri selon une des revendications précédentes, caractérisé en ce que le récipient (9) est bloqué en position de remplissage ou de travail.

6. Magasin de tri selon une des revendications précédentes, caractérisé en ce qu'une butée (17) est prévue pour limiter l'angle de basculement du récipient (9).

7. Magasin de tri selon une des revendications précédentes, caractérisé en ce que l'axe (14) est monté dans la paroi arrière (8) du magasin.

8. Magasin de tri selon une des revendications précédentes, caractérisé en ce que le récipient (9) est fabriqué dans une matière transparente.

9. Dispositif de pose pour la pose de petites pièces (5), telles que rivets, oeillets, boutons-pression, agrafes, plaquettes signalétiques, etc., sur un matériau porteur, comprenant un outil de pose (2) et un magasin de tri (6), caractérisé en ce que le magasin de tri (6) est conçu selon au moins une des revendications 1 à 8.
